Europäisches Patentamt

European Patent Office

Office européen des brevets

(11) Publication number: **0 047 088**
**B1**

# (12) EUROPEAN PATENT SPECIFICATION

(45) Date of publication of patent specification: **17.04.85**

(21) Application number: **81303714.0**

(22) Date of filing: **14.08.81**

(51) Int. Cl.⁴: **G 01 D 11/24,** G 01 D 11/26, G 01 D 11/28

(54) **Dial and pointer electrical instrument.**

(30) Priority: **29.08.80 GB 8027945**

(43) Date of publication of application:
**10.03.82 Bulletin 82/10**

(45) Publication of the grant of the patent:
**17.04.85 Bulletin 85/16**

(84) Designated Contracting States:
**AT BE CH DE FR GB IT LI NL SE**

(56) References cited:
**DE-B-1 118 305**
**FR-A-2 412 737**
**GB-A-2 023 834**
**US-A-2 794 412**
**US-A-3 521 945**
**US-A-3 603 779**
**US-A-3 612 851**
**US-A-3 997 777**

(73) Proprietor: **SCHLUMBERGER ELECTRONICS (U.K.) LIMITED**
**124 Victoria Road**
**Farnborough Hampshire GU14 7PW (GB)**

(72) Inventor: **Thomas, David Ellis**
**36 Phipps Hatch Lane**
**Enfield Middlesex (GB)**
Inventor: **Jeffrey, David Michael**
**1 Queenshead Walk**
**Wormley Herts (GB)**
Inventor: **Simms, David William**
**135 Parsonage Lane**
**Bishops Stortford Herts (GB)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a dial and pointer electrical instrument comprising a movement, carrying a pointer, and a scale in a cylindrical housing closed at one end by a glass through which the pointer is read against the scale, the scale being hub lit by means of at least one bulb emitting light into a cylindrical lens part of a transparent body projecting through the scale (GB—A—1567470). The word "glass" is used for convenience without regard for the material thereof. Such instruments are used, for example, as indicators in aircraft.

Known hub lighted instruments comprise lamps clustered inside an annular lens covered with a mask. The light radiates through the lens in all directions across the scale. The pointer is attached to an arm which passes from the movement through an annular gap between the lamp housing and the scale. It has proved to be impossible to use this construction with smaller size instruments, e.g. with a housing diameter less than 40 mm.

In order to overcome this problem the invention provides an instrument as defined in claim 1 and an instrument as defined in claim 2.

It is known from GB—A—2 023 834 to illuminate a scale by directing light radially *inwardly* to the scale from a surrounding panel. Lamps direct light into the edge of the panel which has reflecting surfaces such that the light travels through the panel and emerges round an aperture through which the scale is visible, thereby to illuminate the scale from the outer periphery thereof. Such an arrangement is not suitable for use in a compact instrument with a cylindrical housing allowing insufficient room for illumination from the outer periphery. In contrast with this prior art the present invention is specifically concerned with improvements in hub lighted instruments in which illumination is radially *outwardly* from the centre.

The invention will be described in more detail, by way of example, with reference to the accompanying drawings, in which:

Figure 1 is a cross-section of a hub lighting arrangement for an instrument,

Figure 2 is a fragmentary face view of this arrangement, and

Figure 3 is a cross-section of an alternative hub lighting arrangement.

A dial and pointer instrument comprises a cylindrical housing (not shown) closed at the front by a glass 11. A moving coil movement 30 is slid into the rear of the housing and fixed in place by catches on a plate at the back of the movement.

The movement 30 has a pointer comprising an arm 38 extending parallel to the axis of the movement and a radial pointer 37 on the end of the arm.

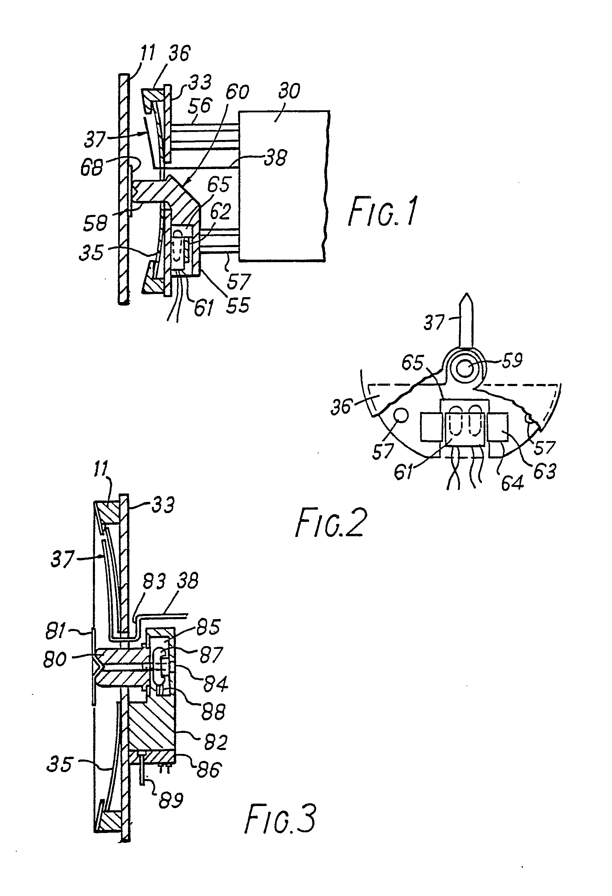

The cylindrical volume swept out by the arm 38 regarded as a generator could, if the radial distances to the arm were great enough, serve to accommodate a conventional hub lighting unit, but in smaller size instruments there will be insufficient space for a conventional unit and the arrangement shown in Figures 1 and 2 or the arrangement shown in Figure 3 is employed.

In Figures 1 and 2, a one-piece transparent plastics body comprises a segment 55 in that sector of the instrument outside the range of movement of the pointer, between the movement 30 proper and a front plate 33 which is attached to the movement by typical screw-pillar mountings 56 and 57. Over the segment 55, shorter pillars 57 are employed. The front plate carries a scale 35 and a bezel ring 36 giving a so-called stepped scale such that the outer part of the scale which is on the ring 36 is level with the pointer 37.

The plastics body moreover comprises a central axially directed, cylindrical lens part 58, with a conical depression 59 in its end, and a prism part formed by a 45° face 60. The segment 55 has a recess 65 housing two encapsulated miniature bulbs 61 which are trapped under a yoke 62 whose lugs 63 are in turn trapped in shallower recesses 64 in the segment 55.

Light from the bulbs is directed generally radially inwardly into the plastics body, internally reflected axially outwards by the face 60, internally reflected in all radial directions by the conical depression 59 and diffused over the scale 35, 36 by the cylindrical lens part 58. The stepped scale has an advantage with this construction in that, because the pointer 37 and bezel surface 36 are level, there can be no shadow of the pointer on index markings on this part of the scale.

A mask 68 over the lens part 58, to prevent the observer seeing a bright patch in the centre of the dial, is conveniently formed by a matt black patch deposited inside the glass 11, or as described below for Fig. 3. The scale 35 is typically also matt black. The plastics body 55, 58 may be a polycarbonate or polymethylmethacrylate, for example.

In the arrangement shown in Figure 3, cylindrical lens 80 is formed like the lens part 58 of Figure 1. A mask is formed by an opaque disc 81 bonded to the front end of the lens, the disc having a conically dished centre fitting into the conical depression in the end of the lens. The lens is held by a screw 84 in a front aperture of a generally radial bulb housing 82 of plastics material fixed to the rear face of the front plate 33 in the zone clear of the movement of the pointer arm 38. This arm is cranked at 83 to clear the inner end of the housing 82 while extending nearer to the axis of the movement where it passes through the central hole in the plate 33. Accordingly, the inner end of the pointer 37 itself is nearer the axis than the part of the arm 38 which passes the inner end of the bulb housing.

The bulb housing 82 has a generally radial bulb recess 85 into which plugs a bulb carrier 86 carrying two bulbs 87 flanking the screw 84 which lies on the movement axis. Since the bulbs are close to the axis, the reflecting surface 60 employed in Figure 1 is not needed. The bulb leads 88 pass through the carrier 86 which can be pulled out of the housing 82, with the two bulbs 87, in the radial direction. A pin 89 in the carrier 86 can be gripped by pliers to facilitate this.

In known arrangements, the bulbs near the axis are removed in the axial direction which requires substantially more disassembly than in the arrangement of Figure 3. In Figure 3 it is merely necessary to withdraw the movement from the housing after undoing the catches and then the bulb holder and bulbs can be pulled out radially for replacement without any further disassembly.

**Claims**

1. A dial and pointer electrical instrument comprising a movement (30), carrying a pointer (37), and a scale (35, 36) in a cylindrical housing closed at one end by a glass (11) through which the pointer is read against the scale, the scale being hub lit by means of at least one bulb (61) emitting light into a cylindrical lens part (58) of a transparent body projecting through the scale, characterised in that the transparent body has a radially offset part (55) behind the scale (35) and housing the bulb or bulbs (61) from which light passes radially inwardly, and an oblique face (60) which internally reflects the light axially towards the glass (11) and into the cylindrical lens part (58).

2. A dial and pointer electrical instrument comprising a movement (30), carrying a pointer (37), and a scale (35, 36) in a cylindrical housing closed at one end by a glass (11) through which the pointer is read against the scale, the scale being hub lit by means of at least one bulb (87) emitting light into a cylindrical lens part (80) of a transparent body projecting through the scale, characterised in that the transparent body has a bulb housing (82) behind the scale (35), with a bulb recess (85) extending radially into the bulb housing, and in that the or each bulb (87) is disposed in the bulb recess adjacent the axis of the movement (30) and is withdrawable in the radial direction.

3. An instrument according to claim 1 or 2, characterised in that the end of the lens part (58) adjacent the glass (11) has a conical depression (59) providing a surface for internal reflection of the axially directed light radially outwards in all directions.

4. An instrument according to claim 1, 2 or 3, characterised in that the scale (35) comprises a bezel ring (36) with a surface carrying index markings and level with the tip of the pointer (37), whereby the light casts no shadow of the pointer on the said surface.

**Revendications**

1. Appareil électrique à cadran et aiguille comprenant un mouvement (30) portant une aiguille (37), et une échelle (35, 36) dans un boîtier cylindrique fermé d'un côté par un verre (11) au travers duquel on lit la position de l'aiguille sur l'échelle, l'échelle étant éclairée au moyen d'au moins une lampe (61) émettant de la lumière dans une lentille cylindrique (58) faisant partie d'un corps transparent traversant l'échelle, caractérisé en ce que le corps transparent comporte une partie (55) décalée radialement derrière l'échelle (35) et renfermant la ou les lampes (61) à partir desquelles la lumière est émise radialement vers l'intérieur et une face oblique (60) qui réfléchit la lumière axialement à l'intérieur vers le verre (11) et dans la lentille cylindrique (58).

2. Appareil électrique à cadran et aiguille comprenant un mouvement (30) portant une aiguille (37), et une échelle (35, 36) dans un boîtier cylindrique fermé d'un côté par un verre (11) au travers duquel on lit la position de l'aiguille sur l'échelle, l'échelle étant éclairée au moyen d'au moins une lampe (87) émettant de la lumière dans une lentille cylindrique (80) faisant partie d'un corps transparent traversant l'échelle, caractérisé en ce que le corps transparent comporte un boîtier de lampe (82) disposé derrière l'échelle (35) avec une cavité (85) se prolongeant radialement dans le boîtier de lampe, et en ce que la ou les lampes (87) sont disposées dans la cavité au voisinage de l'axe du mouvement (30) et sont susceptibles d'être extraites dans la direction radiale.

3. Appareil selon la revendication 1 ou 2 caractérisé en ce que l'extrémité de la lentille cylindrique (58) située du côté du verre (11) a un renfoncement conique (59) fournissant une surface pour réfléchir de façon interne la lumière incidente axiale dans toutes les directions radiales vers l'extérieur.

4. Appareil selon la revendication 1, 2 ou 3, caractérisé en ce que l'échelle (35) comprend un anneau biseauté (36) ayant une surface portant des graduations et de niveau avec la pointe de l'aiguille (37) de façon que la lumière ne projette pas d'ombre de l'aiguille sur ladite surface.

**Patentansprüche**

1. Mit einer Skala und einem Zeiger versehenes elektrisches Instrument mit einem Meßwerk (30), das einen Zeiger (37) trägt und einer Skala (35, 36) in einem zylindrischen Gehäuse, das an einem Ende durch ein Glas (11) geschlossen ist, durch welches der Zeiger gegen die Skala ablesbar ist, wobei die Skalanabe beleuchtet ist mittels, mindestens einer Lampe (61), die Licht in einen zylindrischen Linsenteil (58) eines transparenten durch die Skala vorstehenden Körpers emittiert, dadurch gekennzeichnet, daß der transparente Köper einen radial abgesetzten Teil (55) hinter der Skala (35) zur Aufnahme der Lampe oder Lampen (61) aufweist, von denen Licht radial einwärts gelangt sowie eine Schrägfläche (60), die das Licht intern in Axialrichtung auf das Glas (11) und in den zylindrischen Linsenteil (58) reflektiert.

2. Mit einer Skala und einem Zeiger versehenes elektrisches Instrument mit einem Meßwerk (30), das einen Zeiger (37) trägt und einer Skala (35, 36) in einem zylindrischen Gehäuse, das an einem Ende durch ein Glas (11) geschlossen ist, durch welches der Zeiger gegen die Skala ablesbar ist, wobei die Skalanabe beleuchtet ist mittels mindestens einer Lampe (87), die Licht in einen zylindrischen Linsenteil (80) eines transparenten durch die Skala vorstehenden Körpers emittiert, dadurch gekennzeichnet, daß der transparente Körper ein Lampengehäuse (82) hinter der Skala (35) aufweist, mit einer Lampenausnehmung (85), die sich radial in das Lampengehäuse erstreckt und das die oder jede Lampe (87) in der Lampenausnehmung nahe der Achse des Meßwerks (30) angeordnet und in Radialrichtung herausziehbar ist.

3. Instrument nach Anspruch 1 oder 2, dadurch gekennzeichnet, daß das Ende des Linsenteils (58) nahe dem Glas (11) eine konische Einsenkung (59) aufweist, die eine intern reflektierende Fläche für das axial gerichtete Licht nach radial auswärts in allen Richtungen bildet.

4. Instrument nach Anspruch 1, 2 oder 3, dadurch gekennzeichnet, daß die Skala (35) einen Lünettenring (36) aufweist mit einer Indexmarkierungen tragenden Oberfläche bündig mit der Spitze des Zeigers (37), so daß das Licht keinen Schatten des Zeigers auf die genannte Fläche wirft.

FIG.1

FIG.2

FIG.3

1